Europäisches Patentamt

European Patent Office

Office européen des brevets

(19)

(11) **EP 0 753 923 B1**

(12) **FASCICULE DE BREVET EUROPEEN**

(45) Date de publication et mention
de la délivrance du brevet:
**10.04.2002 Bulletin 2002/15**

(51) Int Cl.⁷: **H02H 7/00**, B05B 5/053,
B05B 5/10

(21) Numéro de dépôt: **96420231.1**

(22) Date de dépôt: **05.07.1996**

(54) **Procédés, dispositif d'élaboration de haute tension et installation de projection électrostatique de produit de revêtement**

Verfahren, Einrichtung zum Herstellung höher Spannung und Anlage zum Spritzen von Beschichtungsmaterialien

Method, device for producing a high voltage and installation for electrostatic spraying of a coating product

(84) Etats contractants désignés:
**BE DE FR GB SE**

(30) Priorité: **10.07.1995 FR 9508621**

(43) Date de publication de la demande:
**15.01.1997 Bulletin 1997/03**

(73) Titulaire: **SAMES Technologies**
**38240 Meylan (FR)**

(72) Inventeurs:
• **Burtin, Jean Pierre**
**38120 Saint-Egreve (FR)**

• **Dobrowolski, Flavien**
**38650 Sinard (FR)**
• **Thome, Caryl**
**38120 Saint-Egreve (FR)**

(74) Mandataire: **Myon, Gérard Jean-Pierre et al**
**Cabinet Lavoix Lyon**
**62, rue de Bonnel**
**69448 Lyon Cedex 03 (FR)**

(56) Documents cités:
**EP-A- 0 185 311      WO-A-90/07381**
**FR-A- 2 618 618**

## Description

L'invention concerne des procédés et un dispositif d'élaboration de haute tension, notamment pour l'application électrostatique de produit de revêtement, en particulier dans une installation de projection d'un tel produit liquide ou pulvérulent. Elle concerne aussi une installation de projection électrostatique de produit de revêtement comprenant un tel dispositif.

Dans de telles installations, qui peuvent être manuelles ou automatiques, une ou plusieurs électrodes portées à la haute tension doivent être alimentées électriquement pour créer un champ électrostatique entre le pulvérisateur et l'objet à revêtir. La tension fournie à une électrode est de l'ordre de plusieurs dizaines de kilovolts (kV). Pour alimenter une électrode à partir du secteur ou de toute autre source de tension classique telle qu'une batterie d'accumulateurs, il est donc nécessaire d'augmenter sensiblement la tension disponible. Le courant est généralement limité à quelques milliampères pour raison de sécurité et pour limiter la puissance électrique consommée par l'électrode, cette puissance devant être partiellement dissipée sous forme de chaleur dans le dispositif.

L'électrode est le plus souvent alimentée par deux sous-systèmes, l'un situé à poste fixe à proximité de l'installation et habituellement dénommé "unité basse tension", l'autre situé au contact du pulvérisateur et qui sera ici dénommé "redresseur-élévateur de tension". Les deux unités sont connectées entre elles par un toron de câbles conducteurs.

La haute tension d'utilisation de l'installation doit varier, en cours de fonctionnement de l'installation, en fonction de la géométrie de la surface à revêtir, du débit de produit de revêtement, des positions relatives des objets à revêtir et des projecteurs de produit, etc... L'opérateur d'une installation de revêtement peut faire varier manuellement ou programmer la valeur de la haute tension fournie à l'électrode en agissant, par exemple, sur la tension d'alimentation de l'unité basse tension. Une mesure de la valeur de la haute tension obtenue permet un fonctionnement en boucle fermée et la tension d'alimentation est ajustée en fonction de la valeur mesurée de la haute tension.

A haute tension de sortie fixée, on s'efforce d'appliquer au redresseur-élévateur un signal périodique de fréquence proche de sa fréquence de résonance afin d'obtenir cette haute tension avec une tension d'alimentation minimale, ce qui permet d'éviter l'échauffement des composants. Des systèmes incorporant cette caractéristique sont connus de FR-A-2 618 618, de US 5, 159, 544 ou de EP-A-0 185 311.

Or, les systèmes de l'art antérieur ne sont pas totalement fiables car une erreur dans la mesure de la tension en aval du transformateur peut provenir d'une mauvaise connexion ou de l'introduction d'un corps étranger, tel que de l'eau, de la graisse, du silicone ou de tout autre matériau dans le connecteur ou dans la soudure servant de point de contact entre le conducteur de mesure et la ligne d'alimentation en haute tension d'une électrode de charge.

Une telle erreur induit une dérive de la tension d'alimentation de l'unité basse tension qui peut conduire à un point de fonctionnement dangereux pour l'opérateur par risque d'électrocution ou pour l'installation par risque d'incendie. En outre, une erreur sur la mesure de la tension de sortie peut perturber l'algorithme de recherche de la fréquence de résonance.

Ainsi, par exemple, la valeur mesurée de haute tension peut être de 70 kV alors que la valeur réelle disponible à l'électrode est de 120 ou 140 kV. Si la valeur de consigne est de 80 kV, l'automate qui pilote l'installation aura tendance à augmenter la tension d'alimentation pour obtenir une tension supérieure. Ce faisant, il risque de dépasser la valeur admissible pour la sécurité de l'installation et de générer une étincelle qui pourra déclencher un incendie ou de détruire les composants de l'unité haute tension par échauffement.

L'invention résout ces problèmes.

Elle concerne un procédé d'élaboration d'une haute tension selon les revendications 1 et 2.

L'invention concerne enfin des dispositifs permettant de mettre en oeuvre les procédés de l'invention et plus précisément des dispositifs conformes aux revendications 7 à 9.

Grâce aux procédés et aux dispositifs de l'invention, une erreur de mesure est immédiatement détectée et toute action corrective peut être initiée sans délai, en particulier l'arrêt du fonctionnement de l'installation et/ou le déclenchement d'une alarme. Les dangers d'électrocution ou d'incendie sont alors écartés.

La grandeur physique mesurée peut être la tension de sortie du redresseur-élévateur, le courant au secondaire d'un transformateur d'alimentation du redresseur-élévateur ou ces deux valeurs à la fois. Le paramètre définissant le signal périodique peut être sa tension nominale ou son courant nominal, sa fréquence, la tension ou le courant d'alimentation d'un générateur de ce signal, ou une combinaison de ces paramètres.

Selon une variante avantageuse de l'invention, un calculateur est utilisé pour comparer la valeur mesurée avec une valeur de référence donnée par une mémoire ou un algorithme de calcul en fonction de la valeur du paramètre choisi. L'écart entre la valeur de référence et la valeur mesurée permet de détecter les erreurs de mesures et le calculateur agit sur un moyen d'inhibition ou une alarme en fonction de cet écart et d'une valeur de seuil fixée pour cet écart.

L'invention sera mieux comprise et d'autres avantages de celle-ci apparaîtront plus clairement à la lumière de la description qui va suivre de deux modes de réalisation d'un dispositif d'élaboration de la haute tension pour une installation de projection de produit de revêtement par voie électrostatique conforme à son principe donnée uniquement à titre d'exemple et faite en référence aux dessins annexés dans lesquels:

- la figure 1 est un schéma de principe d'un dispositif générateur de haute tension conforme à l'invention et
- la figure 2 est un schéma de principe d'une variante du dispositif de la figure 1.

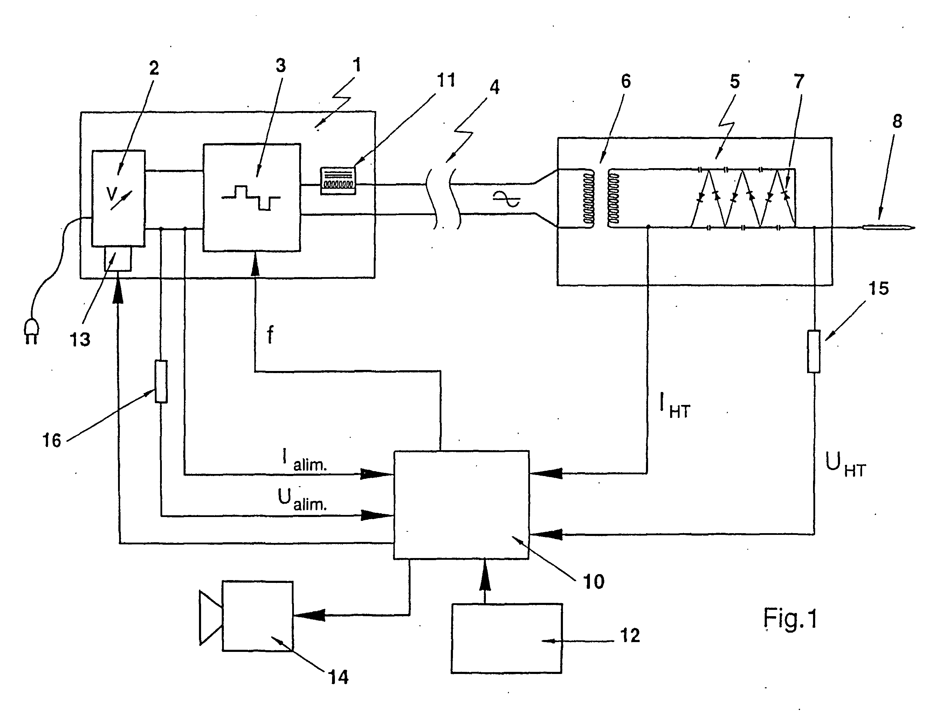

Dans le circuit de la figure 1, une unité basse tension 1 est essentiellement constituée par une alimentation stabilisée 2 connectée au secteur et délivrant un courant continu et une tension continue ajustable à un générateur 3 de courant électrique périodique de fréquence f pilotable en fréquence. L'alimentation stabilisée 2 pourrait aussi avoir pour source de courant une batterie d'accumulateurs ou toute autre source de courant. Le signal électrique périodique généré par l'unité basse tension 1 est un signal de forme constante minimisant les harmoniques de premiers rangs, c'est-à-dire une onde la plus proche possible d'une sinusoïde parfaite. Un filtre 11 permet de lisser partiellement ce signal. L'amplitude de cette onde est variable en fonction de la tension d'alimentation du générateur 3 par l'alimentation stabilisée 2. Bien que la forme du signal évoquée ci-dessus soit particulièrement avantageuse et simple à mettre en oeuvre, tout autre signal périodique permettrait de mettre en oeuvre l'invention, en particulier un signal sinusoïdal.

Le signal périodique issu de l'unité basse tension 1 est appliqué à travers un toron 4 de câbles conducteurs souples à l'entrée d'un redresseur-élévateur de tension 5 comprenant un transformateur d'entrée 6 et un multiplicateur de tension 7. La sortie du multiplicateur de tension 7 est connectée à une électrode de charge 8 d'un projecteur électrostatique de produit de revêtement non représenté.

L'opérateur peut choisir de faire varier la tension délivrée à l'électrode en fonction des caractéristiques de projection souhaitées ou en fonction de la forme des objets à revêtir. La tension varie aussi en fonction des effluves de haute tension au niveau de l'électrode qui dépendent de son environnement, par exemple de la distance de la masse la plus proche.

Conformément à l'invention, un calculateur 10 est connecté d'une part au redresseur-élévateur 5 et reçoit deux signaux représentatifs de la tension ($U_{HT}$) et du courant ($I_{HT}$) dans le redresseur. La tension ($U_{HT}$) est mesurée à travers une résistance de mesure 15. Le calculateur a aussi comme données d'entrée la tension ($U_{alim}$) et le courant ($I_{alim}$) d'alimentation de l'unité basse tension 1. La tension ($U_{alim}$) est mesurée à travers une résistance de mesure 16. En fonction de la valeur de la tension ($U_{alim}$) et du courant ($I_{alim}$) d'alimentation dans l'unité basse tension 1, le calculateur peut déterminer, par accès à une mémoire 12 la valeur de référence de la tension ($U_{HTréf}$) et du courant ($I_{HTréf}$) que devrait fournir le redresseur-élévateur 5. La mémoire 12 est représentée à l'extérieur du calculateur 10 mais, en pratique, elle est le plus souvent comprise dans ce calculateur.

Le calculateur compare la cohérence d'au moins une valeur mesurée ($U_{HT}$, $I_{HT}$) avec au moins une valeur de référence ($U_{HTréf}$, $I_{HTréf}$) en déterminant le pourcentage d'écart entre ces valeurs. Si le pourcentage d'écart est inférieur à 20%, le fonctionnement de l'installation est maintenu. Si le pourcentage d'écart entre ces valeurs est supérieur à 20%, le calculateur active une procédure de défaut qui comprend la mise en route d'un moyen d'inhibition 13 du fonctionnement de l'unité basse tension. Dans le cas d'une alimentation stabilisé 2 reliée au secteur, le moyen d'inhibition 13 est un interrupteur. Simultanément à l'activation du moyen d'inhibition ou alternativement, le calculateur peut aussi déclencher une alarme 14 destinée à prévenir l'opérateur.

La valeur de seuil de déclenchement est déterminée en fonction des caractéristiques de l'installation. La valeur numérique de 20% est donnée uniquement à titre d'exemple et toute valeur entre 0% et 1000% peut être choisie.

La comparaison décrite ci-dessus a lieu en permanence, à une fréquence liée à la rapidité du calculateur 10, de l'ordre de 50 kHz, puisque le calculateur est relié en permanence à l'unité basse tension et au redresseur-élévateur. Compte tenu des régimes transitoires obtenus lors des démarrages de l'alimentation 2 et des forts décalages qui peuvent être engendrés, la vérification de cohérence n'est pas mise en oeuvre pendant une durée déterminée après chaque démarrage. En pratique, cette durée peut être fixée à quelques centaines de millisecondes, voire une seconde.

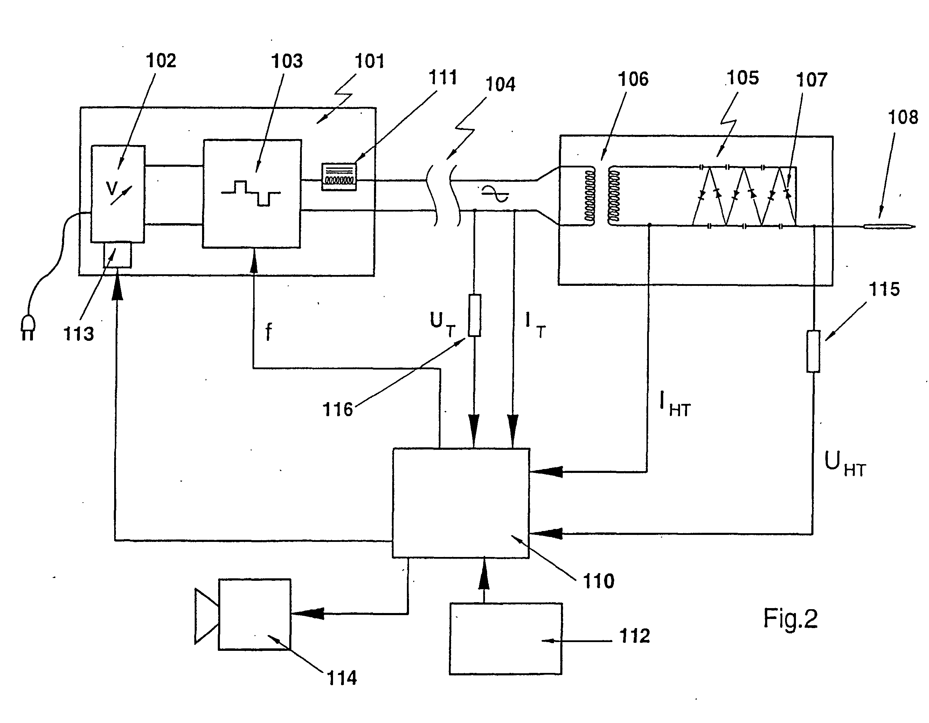

La figure 2 est un schéma d'une variante du dispositif de la figure 1 dans lequel les éléments identiques à ceux de la figure 1 portent les mêmes références augmentées de 100. La tension ($U_{HT}$) et le courant ($I_{HT}$) dans le redresseur-élévateur de tension 105 sont mesurés et transmis au calculateur 110 qui ajuste la valeur de la tension continue délivrée par l'alimentation stabilisée 102 et la valeur de la fréquence f du générateur de courant 103 jusqu'à l'obtention de la valeur de haute tension ($U_{consigne}$) définie par l'opérateur au moyen d'un clavier 112. Ceci constitue une boucle de régulation.

D'autre part, la tension ($U_T$) et le courant ($I_T$) dans le toron de câbles 104 sont mesurés et fournis comme données d'entrée au calculateur 110. A partir de la valeur de consigne ($U_{consigne}$) et de lois physiques établies théoriquement et/ou expérimentalement, le calculateur 110 est apte à déterminer les valeurs théoriques ($U_{Tcalcul}$, $I_{Tcalcul}$) que devraient avoir la tension ($U_T$) et le courant ($I_T$) dans le toron de câbles 104.

Par exemple, la tension au secondaire du transformateur 106 peut être exprimée en

$$U_{secondaire} = K_1 * U_T$$

où $K_1$ est un coefficient numérique dépendant des caractéristiques du transformateur.

La chûte de tension dans le redresseur-élévateur 105 a la forme:

$$\Delta U = \frac{I_{HT}}{f^*C} * (2/3N^3 + 1/2N^2 - 1/6N)$$

où

f est la fréquence du signal périodique;
C est la valeur unitaire de la capacité des condensateurs de la cascade et
N est le nombre d'étages doubleurs de tension de la cascade.

Ceci peut être noté:

$$\Delta U = K_2 * I_{HT}$$

où est $K_2$ un coefficient constant pour un type de cascade donné.

La valeur de la tension en sortie du redresseur-élévateur 105 est un multiple de celle au secondaire du transformateur 106, le coefficient multiplicateur étant le gain de la cascade, $K_3$. La haute tension en sortie du redresseur peut être formulée en fonction des autres valeurs selon:

$$U_{HT} = K_3 * U_{secondaire} - \Delta U$$

$$= K_1 * K_3 * UT - K_2 * I_{HT}$$

Lorsque la valeur de $U_{HT}$ doit être égale à la valeur de consigne $U_{consigne}$, et lorsque $I_{HT}$ est connu, la valeur calculée de. $U_T$ est obtenue par résolution de l'équation du premier degré ci-dessus, soit:

$$U_{Tcalcul} = (U_{consigne} + K_2 * I_{HT}) / (K_1 * K_3)$$

La comparaison entre $U_{Tcalcul}$ et $U_T$ permet de savoir si le générateur fonctionne de façon anormale. On peut procéder comme dans le cas du mode de réalisation de la figure 1 en détectant un dysfonctionnement lorsque l'écart entre la valeur calculée et la valeur mesurée dépasse un pourcentage donné ou un écart donné en volts, par exemple 5 V. De la même manière, la comparaison pourrait porter sur $I_{Tcalcul}$ et $I_T$. Il est à noter que, dans cette variante, l'invention ne fait pas intervenir la mesure de la haute tension obtenue dans l'élévateur de tension 105 puisqu'elle fonctionne indépendamment de la boucle de régulation. Un mauvais contact sur la ligne de mesure de cette grandeur n'influe donc pas sur la sécurité obtenue grâce à l'invention.

Selon un mode de réalisation de l'invention non représentée, la fréquence du signal peut aussi être utilisée comme l'un des paramètres définissant le signal périodique. En effet, cette fréquence a une incidence sur la valeur de référence des grandeurs physiques mesurées car elle influe sur le gain du redresseur-élévateur.

L'invention peut ne fonctionner qu'en comparant une seule grandeur physique à une seule valeur de référence, la valeur de référence étant déterminée en fonction d'un ou plusieurs paramètres déterminant le signal périodique. En effet, par exemple la tension de sortie dépend à la fois de la tension d'alimentation, du courant d'alimentation et de la fréquence du signal périodique.

L'invention a été représentée avec l'unité basse tension 1 séparée du redresseur-élévateur 5 et reliée à celui-ci par un toron 4 de câbles souples mais elle s'applique aussi au cas où ces sous-ensembles font partie d'un système intégré ou compact.

## Revendications

1. Procédé d'élaboration d'une haute tension, notamment pour l'application électrostatique de produit de revêtement, consistant à vérifier la cohérence d'au moins un paramètre ($U_{HTréf}$, $I_{HTréf}$) avec une grandeur physique mesurée ($U_{HT}$, $I_{HT}$) représentative de ladite haute tension, **caractérisé en ce que** ledit paramètre est défini à partir de grandeurs physiques mesurées ($U_{alim}$, $I_{alim}$) représentatives de la tension d'alimentation du dispositif d'élaboration de la haute tension.

2. Procédé d'élaboration d'une haute tension, notamment pour l'application électrostatique de produit de revêtement consistant à vérifier la cohérence d'un paramètre de tension ($U_{Tcalcul}$) avec une grandeur physique représentative d'une tension mesurée ($U_T$) représentative de ladite haute tension ($U_{HT}$), **caractérisé en ce que** ledit paramètre ($U_{Tcalcul}$) est défini à partir d'une valeur de consigne ($U_{consigne}$) de ladite haute tension et du courant d'alimentation ($I_{HT}$) d'une électrode haute tension (108).

3. Procédé selon la revendication 2, **caractérisé en ce que** ledit paramètre ($U_{Tcalcul}$) est défini par l'équation suivante :

$$U_{Tcalcul} = (U_{consigne} + K_2 * I_{HT}) / (K_1 * K_3)$$

où

$K_1$ est un coefficient numérique dépendant des caractéristiques du transformateur ;

$K_2$ est un coefficient constant pour un type de cascade donné;

$K_3$ est le gain de la cascade d'un multiplicateur de tension (107) et

$I_{HT}$ est le courant d'alimentation d'une électrode haute tension (108).

4. Procédé d'élaboration d'une haute tension selon la revendication 3, **caractérisé en ce que** ledit coefficient $K_2$, constant pour un type de cascade, est égal à

$$(2/3\ N^3 + 1/2\ N^2 - 1/6\ N)\ /\ f * C$$

où

f est la fréquence d'un signal périodique d'alimentation d'un dispositif générateur de haute tension ;

C est la valeur unitaire de la capacité des condensateurs de ladite cascade et

N est le nombre d'étages doubleurs de tension de ladite cascade.

5. Procédé selon la revendication 1, **caractérisé en ce que** ladite grandeur physique est la tension ($U_{HT}$) ou le courant ($I_{HT}$) dans un redresseur-élévateur de tension (5).

6. Procédé selon l'une des revendications 1 à 4, **caractérisé en ce que** ladite grandeur physique est la tension nominale ($U_T$) ou le courant nominal ($I_T$) d'un signal périodique fourni à l'entrée (106) d'un redresseur-élévateur de tension (105).

7. Dispositif générateur de haute tension selon la revendication 1, notamment pour alimenter un projecteur électrostatique d'un produit de revêtement comportant :

- des moyens (10, 12) de contrôle de la cohérence d'au moins un paramètre ($U_{HTréf}$, $I_{HTréf}$) avec au moins une grandeur physique mesurée ($U_{HT}$, $I_{HT}$) représentative de ladite haute tension et,
- un calculateur (10) dont certaines entrées sont connectées pour mesurer la tension ($U_{HT}$) et le courant ($I_{HT}$) dans un redresseur-élévateur (5)

**caractérisé en ce que** certaines entrées dudit calculateur sont connectées pour mesurer la tension ($U_{alim}$) et le courant ($I_{alim}$) d'alimentation d'une unité basse tension (1), ledit calculateur étant relié à ou comprenant une mémoire (12) de stockage des valeurs de référence de la tension ($U_{HTréf}$) ou du courant ($I_{HTréf}$) dans ledit redresseur-élévateur (5) en fonction de la tension ($U_{alim}$) ou du courant ($I_{alim}$) d'alimentation de ladite unité basse tension (1).

8. Dispositif générateur de haute tension selon la revendication 2, notamment pour alimenter un projecteur électrostatique d'un produit de revêtement comportant :

- des moyens (110, 112) de contrôle de la cohérence d'au moins un paramètre ($U_{Tcalcul}$, $I_{Tcalcul}$) avec au moins une grandeur physique mesurée ($U_T$, $I_T$) représentative de ladite haute tension créée au niveau d'une électrode haute tension (108) et

- un moyen pour définir une valeur de consigne ($U_{consigne}$),
- un calculateur (110) pour mesurer le courant ($I_{HT}$) dans un redresseur-élévateur (5)

**caractérisé en ce que** le calculateur (110) est agencé pour mesurer la tension ($U_T$) et le courant ($I_T$) en entrée du redresseur-élévateur (10) et pour calculer la valeur ($U_{Tcalcul}$, $I_{Tcalcul}$) dudit paramètre en fonction de ladite valeur de consigne et dudit courant d'alimentation ($I_{HT}$) dans ledit redresseur-élévateur (5).

9. Installation de projection électrostatique de produit de revêtement **caractérisée en ce qu'**elle comprend un dispositif d'élaboration de haute tension selon l'une des revendications 7 ou 8.

**Patentansprüche**

1. Verfahren zur Erzeugung einer Hochspannung, insbesondere zur elektrostatischen Aufbringung von Beschichtungsmaterial, das darin besteht, die Übereinstimmung mindestens eines Parameters ($U_{HTréf}$, $I_{HTréf}$) mit einer gemessenen physikalischen, für die Hochspannung repräsentativen Größe ($U_{HT}$, $I_{HT}$) zu überprüfen, **dadurch gekennzeichnet, daß** der Parameter aus gemessenen physikalischen Größen ($U_{alim}$, $I_{alim}$) definiert wird, die repräsentativ für die Versorgungsspannung der Vorrichtung zur Erzeugung der Hochspannung sind.

2. Verfahren zur Erzeugung einer Hochspannung, insbesondere zur elektrostatischen Aufbringung von Beschichtungsmaterial, das darin besteht, die Übereinstimmung eines Spannungsparameters ($U_{Tcalcul}$) mit einer gemessenen physikalischen Größe, die repräsentativ für eine für die Hochspannung ($U_{HT}$) repräsentative Spannung ($U_T$) ist, zu überprüfen, **dadurch gekennzeichnet, daß** der Parameter ($U_{Talcul}$) aus einem Einstellwert ($U_{consigne}$) der Hochspannung und des Versorgungsstroms ($I_{HT}$) einer Hochspannungselektrode (108) definiert wird.

3. Verfahren nach Anspruch 2, **dadurch gekennzeichnet, daß** der Parameter ($U_{Tcalcul}$) durch die folgende Gleichung definiert wird:

$$U_{Tcalcul} = (U_{consigne} + K_2 * I_{HT})\ /\ (K_1 * K_3)$$

wobei

$K_1$    ein von den Eigenschaften des Transformators abhängiger numerischer Koeffizient ist;

$K_2$    ein konstanter Koeffizient für einen gegebenen Kaskadentyp ist;

$K_3$    die Verstärkung einer Spannungsvervielfacherkaskade (107) ist und

$I_{HT}$    der Versorgungsstrom einer Hochspannungselektrode (108) ist.

4.   Verfahren zur Erzeugung einer Hochspannung nach Anspruch 3, **dadurch gekennzeichnet, daß** der Koeffizient $K_2$, der für einen Kaskadentyp konstant ist, gleich ist zu

$$(2/3 \; N^3 + 1/2N^2 - 1/6 \; N) / f * C$$

wobei

f    die Frequenz eines periodischen Versorgungssignals einer Vorrichtung zur Erzeugung einer Hochspannung ist;

C    der Einheitswert der Kapazität der Kondensatoren der Kaskade ist und

N    die Anzahl der Spannungsdöpplerstufen der Kaskade ist.

5.   Verfahren nach Anspruch 1, **dadurch gekennzeichnet, daß** die physikalische Größe die Spannung ($U_{HT}$) oder der Strom ($I_{HT}$) in einem Gleichrichter-Spannungserhöher (5) ist.

6.   Verfahren nach einem der Ansprüche 1 bis 4, **dadurch gekennzeichnet, daß** die physikalische Größe die Nennspannung ($U_T$) oder der Nennstrom eines periodischen Signals ist, das an dem Eingang (106) eines Gleichrichter-Spannungserhöhers (105) geliefert wird.

7.   Vorrichtung zur Erzeugung einer Hochspannung nach Anspruch 1, insbesondere zur Versorgung eines elektrostatischen Projektors für ein Beschichtungsmittel mit:

-   Mitteln (10, 12) zur Überwachung der Übereinstimmung mindestens eines Parameters ($U_{HTréf}$, $I_{HTréf}$) mit mindestens einer gemessenen, für die Hochspannung repräsentativen physikalischen Größe ($U_{HT}$, $I_{HT}$) und

-   einem Rechner (10), von dem einige Eingänge zur Messung der Spannung ($U_{HT}$) und des Stroms ($I_{HT}$) in einem Gleichrichter-Erhöher (5) beschaltet sind, **dadurch gekennzeichnet, daß** einige Eingänge des Rechners so beschaltet sind, daß sie die Versorgungsspannung ($U_{alim}$) und den Versorgungsstrom ($I_{alim}$) einer Niederspannungseinheit (1) messen, wobei der Rechner an einen Speicher (12) angeschlossen ist oder diesen umfaßt, der Referenzwerte der Spannung ($U_{HTréf}$) oder des Stroms ($I_{HTréf}$) in dem Gleichrichter-Erhöher (5) abhängig von der Versorgungsspannung ($U_{alim}$) oder dem Versorgungsstrom ($I_{alim}$) der Niederspannungseinheit (1) speichert.

8.   Vorrichtung zur Erzeugung einer Hochspannung nach Anspruch 2, insbesondere zur Versorgung eines elektrostatischen Projektors für ein Beschichtungsmaterial mit:

-   Mitteln (110, 112) zur Überwachung der Übereinstimmung mindestens eines Parameters ($U_{Tcalcul}$, $I_{Tcalcul}$) mit mindestens einer gemessenen, für die an der Hochspannungselektrode (108) erzeugten Hochspannung repräsentativen physikalischen Größe und

-   einem Rechner (110) zur Messung des Stroms ($I_{HT}$) in einem Gleichrichter-Erhöher (5) **dadurch gekennzeichnet, daß** der Rechner (110) zur Messung der Spannung ($U_T$) und des Stroms ($I_T$) am Eingang des Gleichrichter-Erhöhers (10) und zum Berechnen des Wertes ($U_{Tcalcul}$, $I_{Tcalcul}$) des Parameters abhängig vom Einstellwert und des Versorgungsstroms ($I_{HT}$) in den Gleichrichter-Erhöher (5) ausgebildet ist.

9.   Elektrostatische Sprühanlage für Beschichtungsmaterial, **dadurch gekennzeichnet, daß** sie eine Vorrichtung zur Erzeugung einer Hochspannung nach Anspruch 7 oder Anspruch 8 umfaßt.

**Claims**

1.   A process for producing a high voltage, in particular for the electrostatic application of coating product, consisting in verifying the coherence of at least one parameter ($U_{HTref}$, $I_{HTref}$) with a measured physical quantity ($U_{HT}$, $I_{HT}$) that is representative of said high voltage, **characterised in that** said parameter is defined on the basis of measured physical quantities ($U_{alim}$, $I_{alim}$) that are representative of the supply voltage of the device for producing the high voltage.

2.   A process for producing a high voltage, in particular for the electrostatic application of coating product, consisting in verifying the coherence of a voltage parameter ($U_{Tcalc}$) with a physical quantity that is representative of a measured voltage ($U_T$) that is representative of said high voltage ($U_{HT}$), **characterised in that** said parameter ($U_{Tcalc}$) is defined on the basis of a desired value ($U_{des}$) of said high voltage and of the supply current ($I_{HT}$) of a high-voltage electrode (108).

3. Process according to Claim 2, **characterised in that** said parameter ($U_{Tcalc}$) is defined by the following equation:

$$U_{Tcalc} = (U_{des} + K_2 * I_{HT}) / (K_1 * K_3)$$

where

K$_1$ is a numeric coefficient dependent on the characteristics of the transformer;

K$_2$ is a constant coefficient for a given type of cascade;

K$_3$ is the gain of the cascade of a voltage multiplier (107) and

$I_{HT}$ is the supply current of a high-voltage electrode (108).

4. Process for producing a high voltage according to Claim 3, **characterised in that** said coefficient K$_2$, which is constant for a type of cascade, is equal to

$$(2/3 N^3 + 1/2 N^2 - 1/6 N) / f * C$$

where

f is the frequency of a periodic signal for supplying a high-voltage generator device;

C is the unitary value of the capacitance of the capacitors of said cascade and

N is the number of voltage-doubler stages of said cascade.

5. Process according to Claim 1, **characterised in that** said physical quantity is the voltage ($U_{HT}$) or the current ($I_{HT}$) in a rectifier/voltage-booster (5).

6. Process according to one of Claims 1 to 4, **characterised in that** said physical quantity is the nominal voltage ($U_T$) or the nominal current ($I_T$) of a periodic signal which is provided at the input (106) of a rectifier/voltage-booster (105).

7. A high-voltage generator device according to Claim 1, in particular for supplying an electrostatic projector for a coating product, comprising:

- means (10, 12) for checking the coherence of at least one parameter ($U_{HTref}$, $I_{HTref}$) with at least one measured physical quantity ($U_{HT}$, $I_{HT}$) that is representative of said high voltage and
- a computer (10), some inputs of which are connected for measuring the voltage ($U_{HT}$) and the current ($I_{HT}$) in a rectifier/booster (5)

**characterised in that** some inputs of said computer are connected for measuring the supply voltage ($U_{alim}$) and the supply current ($I_{alim}$) of a low-voltage unit (1), said computer being linked to or comprising a memory (12) for storing reference values of the voltage ($U_{HTref}$) or of the current ($I_{HTref}$) in said rectifier/booster (5) as a function of the supply voltage ($U_{alim}$) or of the supply current ($I_{alim}$) of said low-voltage unit (1).

8. High-voltage generator device according to Claim 2 , in particular for supplying an electrostatic projector for a coating product, comprising:

- means (110, 112) for checking the coherence of at least one parameter ($U_{Tcalc}$, $I_{Tcalc}$) with at least one measured physical quantity ($U_T$, $I_T$) that is representative of said high voltage which is created in the region of a high-voltage electrode (108) and
- a means for defining a desired value ($U_{des}$),
- a computer (110) for measuring the current ($I_{HT}$) in a rectifier/booster (5)

**characterised in that** the computer (110) is designed for measuring the voltage ($U_T$) and the current ($I_T$) at the input of the rectifier/booster (10) and for calculating the value ($U_{Tcalc}$, $I_{Tcalc}$) of said parameter as a function of said desired value and of said supply current ($I_{HT}$) in said rectifier/booster (5).

9. An installation for electrostatic projection of coating product, **characterised in that** it comprises a device for producing high voltage according to one of Claims 7 or 8.

Fig.1

EP 0 753 923 B1

Fig.2

EP 0 753 923 B1